# EUROPEAN PATENT APPLICATION

(11) **EP 3 594 973 A1**
(43) Date of publication of application: **15.01.2020**
(21) Application number: 18182939.1
(22) Date of filing: 11.07.2018
(51) Int. Cl.: H01F 27/14, B01D 53/26

(54) **A DETECTION DEVICE FOR A POWER TRANSFORMER BREATHER**

(71) Applicant: ABB Schweiz AG, 5400 Baden (CH)
(72) Inventor: Manco, Giuseppe Leonardo, I-87029 Scalea (CS) (IT); Giannone, Riccardo, I-36077 Altavilla Vicentina (VI) (IT)
(74) Representative: De Bortoli, Eros

(57) **Abstract**

A detection device (1) to detect an operating condition of air-drying salts contained in a breather (50) for power transformers characterised in that it is operatively coupleable to said breather and it comprises:
- illumination means (2) comprising at least a light source (21) adapted to illuminate air-drying salts contained in said breather with a first light radiation (LI);
- acquisition means (3) comprising at least a light sensor (31) adapted to receive a second light radiation (L2) coming from air-drying salts contained in said breather, said acquisition means being adapted and to provide first detection signals (S1) indicative of the colour of said second light radiation;
- a control unit (4) for controlling operation of said detection device, said control unit being adapted to receive and process said first detection signals.

## Description

The present invention relates to a detection device for a power transformer breather. More particularly, the present invention relates to a detection device for monitoring operating conditions of air-drying salts contained in a power transformer breather.

Power transformers are widely known in the field of electric power distribution and transmission installations.

Typically, these apparatuses comprise a number of components (e.g. the magnetic core and related windings accommodated in a tank filled with an insulating liquid (e.g. a mineral oil) used as a coolant and providing electric insulation between live parts.

During the operating life of a power transformer, specific physical quantities (e.g. volume, pressure, and the like) of the insulating liquid may vary (e.g. due to temperature fluctuations, gas accumulation within the tank, and the like) and lead to dangerous operating conditions.

For this reason, many power transformers are equipped with an external expansion container (the so-called "conservator") to allow expansion of the insulating liquid in case of need.

In general, the conservator has its internal volume in fluid-dynamic communication with the tank and the external atmosphere in such a way to be partially filled with insulating liquid and air, which, in some cases, may be in direct contact.

When it expands, the insulating liquid partially fills the conservator and pushes air out of this latter whereas, when it reduces its overall volume, the insulating liquid retracts from the conservator and fresh air is sucked from the external environment.

A power transformer is normally equipped with a breather operatively coupled with the conservator in such way that air expelled from or breathed in the conservator is forced to pass through said breather.

A power transformer breather is an accessory device normally filled with air-drying salts (e.g. silica gel) suitable to absorb moisture from air passing therethrough. In this way, accumulation of moisture in the internal volume of the conservator and, more in general, of the tank is avoided or remarkably reduced.

In most of the cases, air-drying salts change their color while adsorbing moisture from air.

As is known, after a given number of breathing cycles, air-drying salts contained in power transformer breather may reach a saturation condition, in which they are no more capable of effectively absorbing moisture from circulating air.

In this case, they need to be replaced (e.g. by an operator) or reconditioned (e.g. by activating a heating device operatively coupled with the breather) in order to restore air-drying functionalities of the breather.

In general, replacing or re-conditioning interventions of air-drying salts contained in a power transformer breather represent time-consuming and expensive maintenance activities, which are unfortunately necessary and quite important to ensure a safe operation and a longer life time of the power transformer.

As is known, detection devices to detect an operative condition of air-drying salts contained in a power transformer breather have been developed during the years.

These detection devices are basically addressed to automatically check whether air-drying salts have reached a saturation condition to promptly intervene in case of need.

Some detection devices of the state of the art are designed to directly or indirectly measure the moisture content and/or temperature of air passing through a duct operatively coupling the conservator and the breather. Basing on the measurement of these physical quantities, a possible saturation condition for air-drying salts contained in the breather is determined.

Other currently available detection devices are designed to measure the weight of air-drying salts contained in the breather, e.g. by means of suitable load cells. Basing on said weight measurement, a possible saturation condition for air-drying salts contained in the breather is determined.

Although detection devices of the state of the art perform their functions in a satisfying way, there are some aspects to improve, in particular with regards of the accuracy in determining a possible saturation condition of air-drying salts contained in the breather.

Additionally, currently available solutions are relatively expensive from an industrial point of view and, often, unsuitable to be installed for retrofitting purposes.

The present invention intends to respond to this need by providing a detection device for a breather for power transformers, according to claim 1 and the related dependent claims.

In a general definition, the detection device, according to the invention, which is operatively coupleable to said breather to detect operating conditions of air-drying salts contained in said breather, comprises:
- illumination means comprising at least a light source adapted to illuminate air-drying salts contained in said breather with a first light radiation;
- acquisition means comprising at least a light sensor adapted to receive a second light radiation coming from air-drying salts contained in said breather. Said acquisition means are adapted to provide first detection signals indicative of the colour of said second light radiation;
- a control unit for controlling operation of said detection device. Said control unit is conveniently adapted to receive and process said first detection signals.

Preferably, said control unit is adapted to determine operating conditions of air-drying salts contained in the power transformer breather based on said first detection signals.

Preferably, the detection device, according to the invention, comprises a switch device to activate a remote protection device. Said control unit is operatively coupled with said switch device.

Preferably, the detection device, according to the invention, comprises a communication port for communication with a remote computerised device. Said control unit is operatively coupled with said communication port.

Preferably, the detection device, according to the invention, comprises a power supply unit operatively coupleable to a power supply source and adapted to feed one or more components of said detection device.

Preferably, the detection device, according to the invention, comprises fixing means for mechanical connection with the power transformer breather.

Preferably, said control unit is adapted to provide control signals to command said remote protection device upon an activation by said switch device, which follows the determination of operating conditions of air-drying salts contained in said breather by processing said first detection signals.

Preferably, said control unit is adapted to provide second detection signals indicative of operating conditions of air-drying salts contained in said breather to said remote computerised device through said communication port, conveniently upon determining of said operating conditions by processing said first detection signals.

Preferably, said control unit is adapted to provide third detection signals indicative of the colour of said second light radiation to said remote protection device through said communication port, conveniently upon processing said first detection signals.

In a further aspect, the present invention relates to a breather for power transformers, according to the following claim 10.

In a further aspect, the present invention relates to a power transformer, according to the following claim 11.

Further characteristics and advantages of the present invention will be more apparent with reference to the description given below and to the accompanying figures, provided purely for explanatory and non-limiting purposes, wherein:
- Figs. 1-2 schematically illustrate partial views of a power transformer including the detection device, according to the present invention, operatively coupled to a power transformer breather;
- Figs. 3-7 schematically illustrate the detection device, according to the present invention, in combination with a power transformer breather;
- Figs. 8-9 schematically illustrate the internal structure and an operation mode of the detection device, according to the present invention.

With reference to the aforesaid figures, the detection device, according to the invention, will now be described in details.

In the following detailed description of the invention, identical components or elements are generally indicated by same reference numerals, regardless of whether they are shown in different embodiments. In order to clearly and concisely disclose the invention, the drawings may not necessarily be to scale and certain features of the invention may be shown in a schematic form.

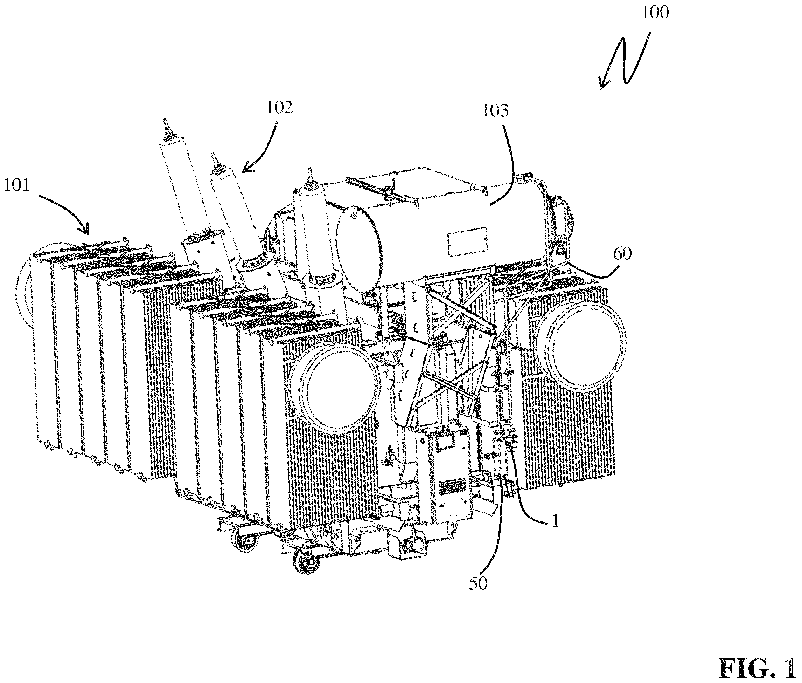

For the sake of clarity, it is specified that, within the scope of the present invention, the expression "in fluid-dynamic communication" referred to some parts of said power transformer has to be intended with reference to an operating condition, in which a fluid (e.g. insulating liquid or air) can flow between said parts (through suitable ducts or suitable ports). In figure 1, a power transformer 100 for electric power transmission and distribution installations (i.e. operating at voltages higher than 1 kV AC) is schematically shown.

The power transformer 100 comprises a tank 101 filled with a liquid having cooling and electrical insulation properties, e.g. mineral, vegetal, ester or silicone oil (here referred to as "insulating liquid" for the sake of brevity).

Some components of the power transformer (e.g. the magnetic core and the related windings) are accommodated within the tank 101 and are at least partially immersed in the insulating liquid.

Other components of the power transformer 100, such as the electric bushes 102, are fixed on an external wall of the tank 101.

The power transformer 100 comprises a conservator 103 formed by a container fixed on an external wall of the tank 101 and in fluid-dynamic communication with said tank through a suitable duct arrangement (not shown).

The conservator 103 is basically aimed at allowing expansion of the insulating liquid contained in the tank 101 into its internal volume, depending on the operating conditions of said insulating liquid.

In normal conditions, the conservator 103 is partially filled with insulating liquid and air.

The conservator 103 is in fluid-dynamic communication with the external environment in such a way to absorb or expel air from or to the atmosphere in response to the expansion or retraction of the insulating liquid into or from its internal volume.

In general, most of the components of the power transformer 100, including the conservator 103, may be of known type and they will not be here described in further details for the sake of brevity.

In order to put the conservator 103 in fluid-dynamic communication with the external environment, the power transformer 100 comprises at least a breather 50 and a duct 60 operatively coupling the conservator 103 with the breather 50.

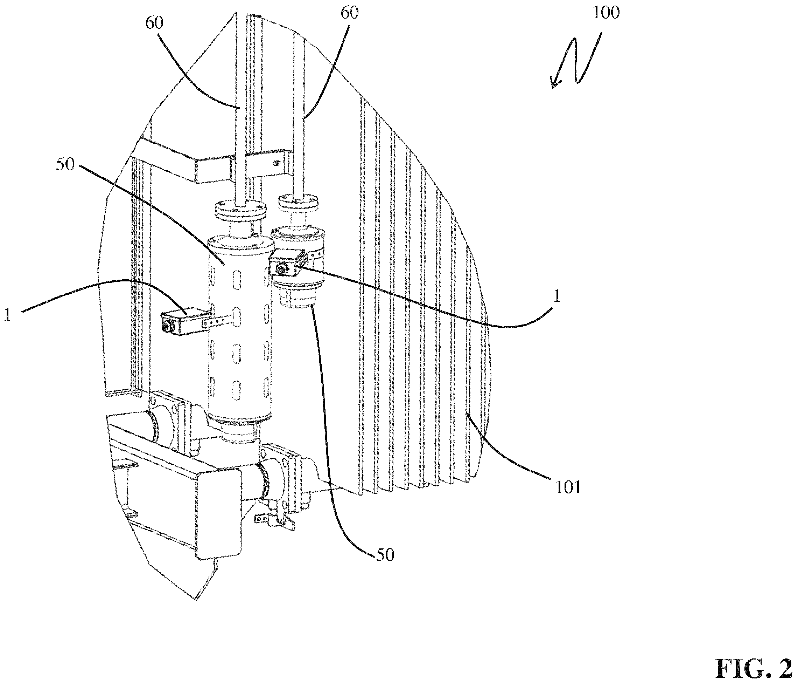

In figures 1-2, the power transformer 100 is shown as comprising two breathers, each coupled with the conservator 103 with a corresponding duct 60.

However, according to possible embodiments of the invention, the power transformer 100 may comprise a single breather 50 or three or more breathers according to the needs. Preferably, a breather 50 comprises shaped hollow body, e.g. having a substantially cylindrical geometry.

At a first end, the breather 50 preferably comprises a flanged portion 51 adapted to be fixed to a free end (not shown) of the duct 60 and including a first through port 510, though which air coming from or directed to the conservator 103 can pass.

At a second end, preferably opposite to said first end, the breather 50 comprises a terminal portion 52 including a second through port 520, through which air coming from or directed to the external environment can pass.

Between the flanged portion 51 and the terminal portion 52, the breather 50 preferably comprises a container portion 53 adapted to contain air-drying salts (not shown), e.g. silica gel.

The container portion 53 comprises an outer case 533 defining an internal cavity 530 in fluid-dynamic communication with the first and second through ports 510 and 520 and adapted to contain air-drying salts, preferably arranged in an inner container 531.

Preferably, the inner container 531 is made (at least partially) of a transparent material (e.g. a transparent plastic material or glass) and is provided with suitable holes (not shown) to allow the passage of air therethrough.

In this way, air circulating through the enclosure portion 53 (and more in general the breather 50) comes in contact with air-drying salts and it is dried by these latter.

The outer case 533 is conveniently provided with one or more windows 532 through which air-drying salts can be illuminated and visually or optically inspected. In practice, windows 532 allow air-drying salts to be visible from the outside.

Conveniently, when air-drying salts are arranged in the inner container 531, transparent portions of the inner container 531 are arranged at windows 532.

In principle, the breather 50 may be industrially realized according to solutions of different type with respect to the one described above. However, conveniently, the breather 50 needs to be provided with suitable windows (or equivalent openings) through which air-drying salts are visible from the outside.

As shown in figure 1, the transformer 100 is equipped with a detection device 1, according to the present invention.

According to the invention, the detection device 1 is operatively coupleable to a corresponding breather 50 to detect an operating condition of air-drying salts contained in said breather.

Conveniently, the power transformer 100 comprises a detection device 1 for each breather 50 included in the transformer.

However, according to possible embodiments of the invention, one or more breathers 50 of the power transformer 100 may not be provided with a detection device.

In order to operatively couple with a corresponding breather 50, a detection device 1 may be mechanically fixed to any suitable part of the power transformer.

Preferably, however, the detection device 1 is mechanically fixed directly to the breather 50, more preferably to the container portion 53 of this latter. To this aim, the detection device 1 may comprise fixing means 7 for mechanical connection with the breather 50. As shown in the cited figures, the fixing means 7 may consist of a supporting clamp fixable (e.g. by screws) to a portion of the breather 50 (e.g. the container portion 53) and to an outer case 11 of the detection device 1.

According to the invention, the detection device 1 comprises illumination means 2 comprising a light source 21 adapted to illuminate air-drying salts contained in the breather 50 with a first light radiation L1.

As an example, the light source 21 may include one or more LED devices.

First light radiation L1 is basically formed by at least a portion of the light emitted by the light source 21 when this latter is activated.

Preferably, when the detection device 1 is operatively coupled with the breather 50, the light source 21 projects first light radiation L1 along a first optical path O1, which extends from the light source 21 and passes through a corresponding window 532 of the breather 50 and reaches air-drying salts contained in this latter.

In this way, first light radiation L1 emitted by the light source 2 may illuminate air-drying salts, possibly upon passing through a transparent portion of the inner container 531 when this latter is present.

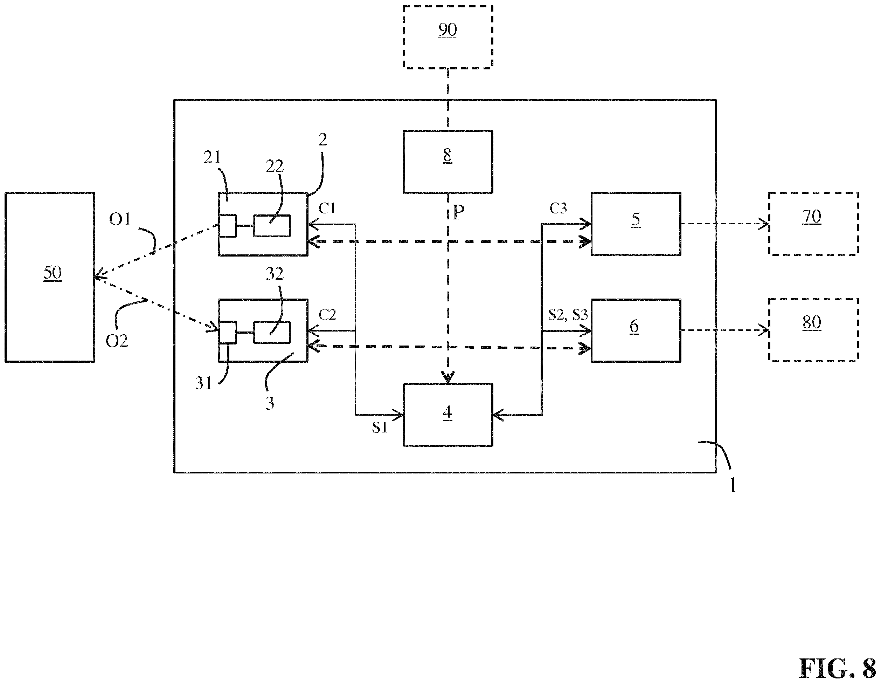

Preferably, the optical path O1 is substantially a direct and rectilinear optical path in air as shown in figure 8. However, according to some variants of the invention (not shown), the optical path O1 may be more articulated and involve the arrangement of suitable optical mirrors, lenses or optical fibers.

Preferably, first light radiation L1 emitted by the light source 2 is a white light. However, in some cases, it may be an orange or green light depending on the nature of air-drying salts contained in the breather 50.

Preferably, illumination means 2 comprise a driving circuit 22 operatively coupled with first light source 21 and adapted to drive this latter upon receiving suitable control signals.

The driving circuit 22 may be realized according to circuital solutions of known type (e.g. as a current driving circuit) and it will not here further described for the sake of brevity. According to the invention, the detection device 1 comprises acquisition means 3 comprising at least a light sensor 31 adapted to receive a second light radiation L2 coming from air-drying salts.

As an example, the light sensor 31 may include one or more two-dimensional sensors of CCD or C-MOS type.

Second light radiation L2 is basically formed by at least a portion of the reflected light emitted by air-drying salts when these latter are illuminated by first light radiation L1.

Preferably, when the detection device 1 is operatively coupled with the breather 50, the light sensor 31 receives second light radiation L2 along a second optical path O2, which extends from air-drying salts contained in the breather 50 and passes through a window 532 of the breather 50.

In this way, second light radiation L2 (which is formed by the reflected light emitted by the illuminated air-drying salts) may receive the light sensor 31, possibly upon passing through a transparent portion of the inner container 531 where said air-drying salts are collected. Preferably, the optical path O2 is substantially a direct and rectilinear optical path in air as shown in figure 8. However, according to some variants of the invention (not shown), the optical path O2 may be more articulated and involve the arrangement of suitable optical mirrors, lenses or optical fibers.

Preferably, as shown in the cited figures, the optical paths O1, O2 pass through a same window 532 of the breather 50. In this case, the illuminating means 2 and the acquisition means 3 are operatively associated to a same window 532 of the breather 50.

According to some variants of the invention (not shown), however, said optical paths may pass through different windows 532 of the breather 50. In this case, the illuminating means 2 and the acquisition means 3 are operatively associated to different windows 532 of the breather 50.

Preferably, the light radiation L2 received by the light source 3 is an orange, black or green light depending on the operating conditions (i.e. whether they are in a saturation condition or not) and the nature of air-drying salts contained in the breather 50 and depending on the colour of first light radiation L1.

Preferably, the acquisition means 3 comprises a decoding circuit 32 operatively coupled with the light sensor 31 to identify the colour of second light radiation L2 received by said light sensor.

Conveniently, the colour decoding circuit 32 is adapted to provide first detection signals S1 indicative of the colour of said second light radiation;
The decoding circuit 32 may be realized according to circuital solutions and standard codifying rules for color classification of known type (e.g. as a RGB or PANTONE decoding circuit) and it will not here further described for the sake of brevity.

According to the invention, the detection device 1 comprises a control unit 4 for controlling operation of the detection device 1.

Preferably, the control unit 4 comprises digital data processing resources (e.g. one or more microprocessors) configured to execute suitable software instructions stored in a memory to carry out the functionalities provided for said control unit.

Conveniently, the control unit 4 is operatively coupled with the illuminating means 2 and the acquisition means 3, in particular with the driving circuit 22 and the decoding circuit 32 of these latter.

Preferably, the control unit 3 is adapted to control the operation of the illuminating means 2 and of the acquisition means 3 by providing suitable control signals C1, C2 to the driving circuit 22 and the decoding circuit 32.

According to an important aspect of the invention, the control unit 3 is adapted to receive and process the first detection signals S1 provided by the acquisition means 3, namely by the decoding circuit 32 of this latter.

As it will be more apparent from the following, the control unit 4 may be configured to process the first detection signals S1 to determine the operating conditions of air-drying salts contained in the breather 50.

In addition or as an alternative, the control unit 4 may be configured to process the first detection signals S1 to remotely transmit further detection signals indicative the colour of second light radiation L2.

Preferably, the detection device 1 comprises a switch device 5 operatively coupled with the control unit 4. The switch device 5 is adapted to allow the control unit 4 to activate a remote protection device 70, e.g. a relay or a transistor (even of known type) capable of interrupting operation of the power transformer 100 or capable to activate a suitable alarm device upon receiving suitable control signals.

The switch device 5 may formed by a relay or a transistor capable of changing its operating status upon receiving suitable control signals from the control unit 4.

Preferably, the detection device 1 comprises a communication port 6 operatively coupled with the control unit 4. The communication port 6 is adapted to allow the control unit 4 to communicate with a remote computerised device 80 configured to receive and process data signals provided by said control unit.

Communication port 6 may be of known type, e.g. of the wired type (such as a USB, TCP/IP, Fieldbus communication port) or of the wireless type (such as WiFi™, ZigBee™, Bluetooth, NFC communication port).

Preferably, the detection device 1 comprises a power supply unit 8 operatively coupleable with a power supply source 90 (e.g. a suitable feeding line) and adapted to feed (electric power P) the internal components of the detection device, e.g. the illuminating means 2, the acquisition means 3, the control unit 4, the switch device 5 and the communication port 6.

The power supply unit 8 may be realized according to circuital solutions of known type and it will not here further described for the sake of brevity.

According to preferred embodiments of the invention, the control unit 4 is adapted to determine the operating conditions of air-drying salts contained in the breather 50 based on the first detection signals S1 received from the acquisition means 3.

The determination of the operating conditions of air-drying salts may be conveniently carried out by means of suitable look-up tables stored in a memory.

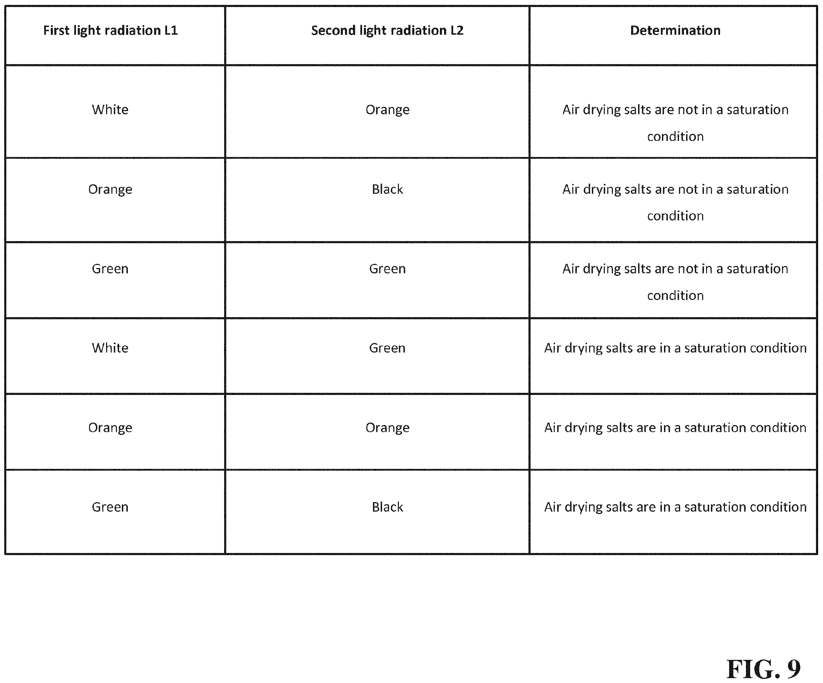

An example of look-up table is conveniently shown in figure 9.

As it is possible to appreciate, the look-up table provides predefined determination criteria to determine the operating conditions of air-drying salts contained in the breather 50 depending on the colour of first light radiation L1 provided by the light source 21 and the colour of second light radiation L2 received by the light sensor 31.

Obviously, look-up tables of different type may be set depending on the colour of the light radiations L1, L2 and on the nature of air-drying salts contained in the breather 50.

Preferably, the control unit 4 is adapted to provide control signals C3 to the remote protection device 70 upon the activation by the switch device 5, conveniently following the determination of an operating condition of air-drying salts contained in the breather 50 by processing the first detection signals S1.

Advantageously, the control unit 4 is adapted to command the remote protection device 70 to intervene when a saturation condition of air-drying salts contained in the breather 50 is determined. In this case, the detection device 1 conveniently provides remote protection services to ensure a safe operation of the power transformer 100.

Preferably, the control unit 4 is adapted to provide second detection signals S2 indicative of an operating condition of air-drying salts contained in the breather 50 to the remote computerised device 80 through the communication port 6, conveniently following the determination of operating conditions of said air-drying salts by processing the first detection signals S1. In this case, the detection device 1 provides remote monitoring services on the operating condition of air-drying salts.

Preferably, the control unit 4 is adapted to provide third detection signals S3 indicative of the colour of second light radiation L2 received by the light sensor 31 to the above-mentioned remote computerised device through the communication port 6, conveniently following the processing of the first detection signals S1. In this case, the detection device 1 provides remote detection services of the colour of air-drying salts. The determination of the actual operating conditions of air-drying salts may be conveniently carried out by the remote computerised device 80.

Figure 8 shows an example of industrial implementation of the detection device 1. Preferably, the detection device 1 comprises an outer case 11 (e.g. with a box-like shape) that defines an internal volume for accommodating the internal electronic components.

When it is operatively coupled with the breather 50, the detection device 1 has a first coupling wall 11 facing the breather 50, more particularly the container portion 53 of this latter. Preferably, the illumination means 2 and the acquisition means 3 of the detection device 1 are fixed at a suitable seat 110 obtained at the coupling wall 111.

In this way, when the detection device 1 is operatively coupled with the breather 50, the illumination means 2 and the acquisition means 3 face the breather device 1, preferably at a same window 532, thereby being operatively coupled with this latter.

Preferably, the detection device 1 comprises an electronic board 12 fixed to a supporting internal surface of the outer case 11. On the electronic board 12, the remaining electronic components of the detection device 1, such as the control unit 4, the power supply unit 8, the switch device 5 and the communication port 6, are suitably arranged.

Possible implementation variants are possible according to the needs and the available hardware resources. As an example, the internal components 2, 3, 4, 5, 6, 8 of the detection device 1 can be placed on a single electronic board, or they can be realized on dedicated electronic boards that are subsequently wired.

Preferably, at a second coupling wall 112, e.g. opposite to the first coupling wall 11, the outer case 11 comprises a through opening 113 to allow cabling of the internal components with external devices, e.g. the power supply source 90.

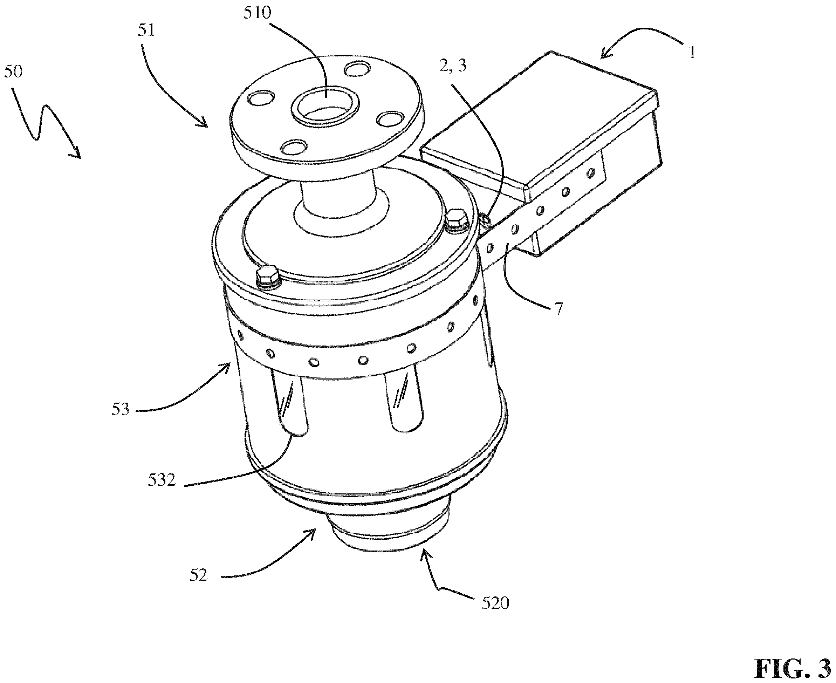

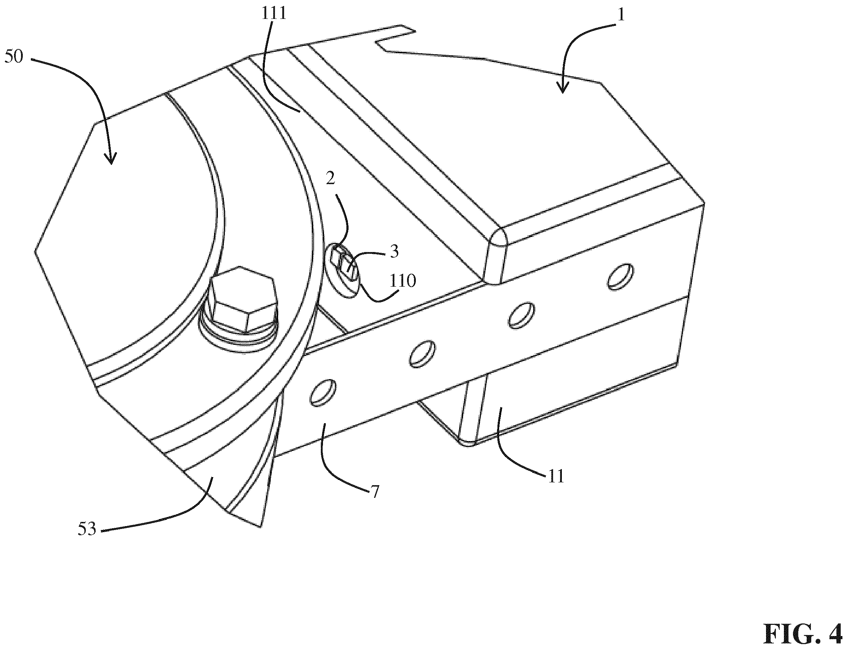

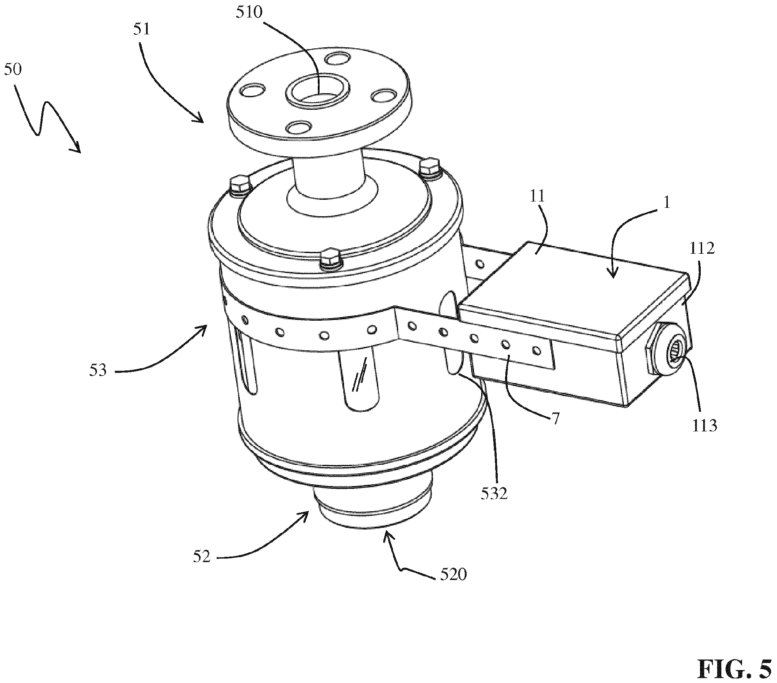

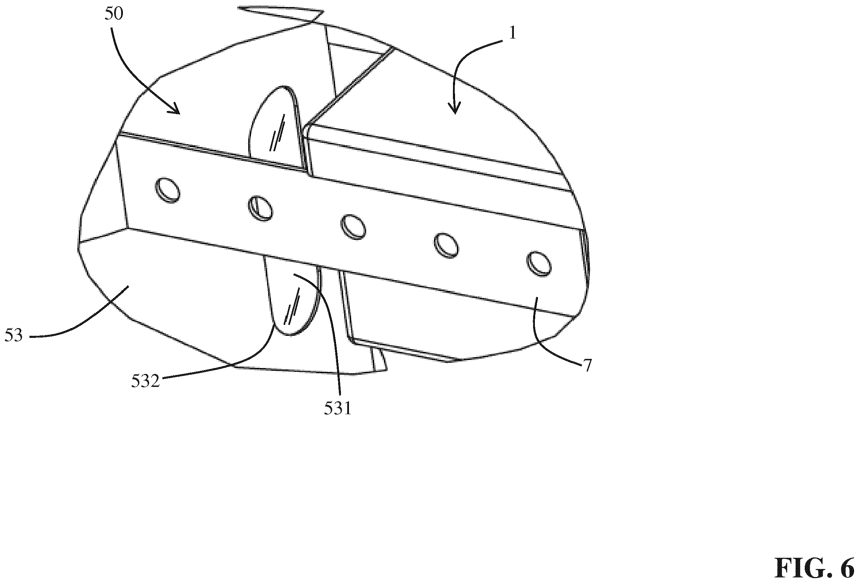

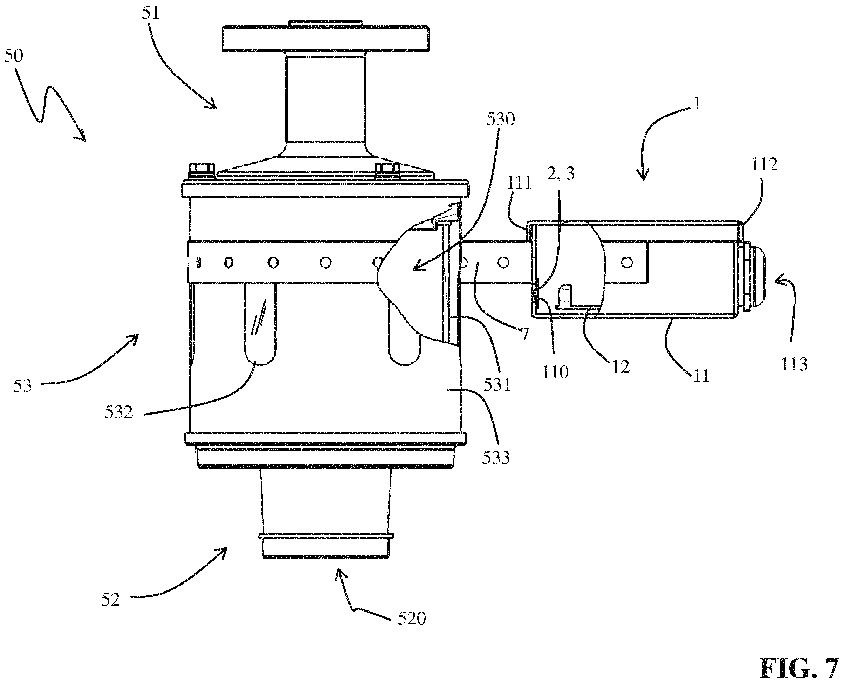

The above-mentioned cited figures 1-8 show preferred embodiments of the invention, according to which, a breather device 50 is operatively coupled with a single detection device 1.

According to possible variant embodiments of the invention (not shown), the breather device 50 may be operatively coupled with a plurality of detection devices 1, each of which may be conveniently installed in such a way to have its illumination means 2 and acquisition mean 3 are operatively coupled with a corresponding window 532 of the breather device 50.

Such a solution provides advantages in terms of accuracy in determining the operating conditions of air-drying salts and in terms of safety (redundant detection of the operating conditions of air-drying salts).

Operation of the detection device 1 as in the embodiment shown in figure 1-8 is now briefly described.

The detection device 1 is installed in such a way that the illumination means 2 are operatively coupled with a window 532 of the breather 50.

When activated, the illumination means 2 illuminate air-drying salts by means of the first radiation L1 passing through the window 532 (and possibly through a corresponding transparent portion of the inner container 531).

Illumination means 2 may be continuously activated to permanently illuminate air-drying salts. As an alternative, activation of the illumination means may occur at predefined instants, for example on a periodic based (e.g. every 24 hours at night) or it may occur following a suitable command received by the control unit 4.

When illuminated by first light radiation L1, air-drying salts emit second light radiation L2 that passes through the window 532 (and possibly through a corresponding transparent portion of the inner container 531) and is collected by the acquisition means 3.

In other words, when illuminated by first light radiation L1, air-drying salts show a colour that is detected by the acquisition means 3.

The acquisition means 3 provide the first detection signals S1 to the control unit 4, which suitably process these latter to determine the operating conditions of air-drying salts (conveniently to determine whether these latter are in a saturation condition or not) and/or provide further detection signals S3 indicative of the colour of second light radiation L2 to be remotely transmitted.

Following the possible determination of the operating conditions of air-drying salts, the control unit 4 may provide suitable control signals C3 for the remote protection device 70 and/or detection signals indicative of the operating conditions of air-drying salts to the remote computerised device 80.

The detection device 1, according to the invention, provides relevant advantages with respect to corresponding detection devices of the state of the art.

The detection devices allows suitably exploiting colour-changing properties of air-drying salts contained in the breather 50 to determine the operating conditions of these latter (in particular whether they are in a saturation condition or not).

Being based on an optical detection process, the detection device 1 provides an accurate monitoring of the operating conditions of air-drying salts. This allows optimizing the scheduling of possible maintenance intervention to replace or properly regenerate air-drying salts contained in the breather 50 with a consequent reduction of the overall operating costs of the power transformer 100.

The detection device 1 has a simple and compact structure and it may be easily installed on the field, even for coupling with already installed breathers. The detection device 1 is thus particularly suitable for retrofitting purposes.

The detection device 1 can be easily manufactured at industrial level with production costs quite competitive with respect to traditional devices of the same type.

## Claims

1. A detection device (1) for a power transformer breather (50), said detection device being operatively coupleable to said breather to detect operating conditions of air-drying salts contained in said breather **characterised in that** it comprises:
- illumination means (2) comprising at least a light source (21) adapted to illuminate air-drying salts contained in said breather with a first light radiation (L1);
- acquisition means (3) comprising at least a light sensor (31) adapted to receive a second light radiation (L2) coming from air-drying salts contained in said breather, said acquisition means being adapted to provide first detection signals (S1) indicative of the colour of said second light radiation;
- a control unit (4) for controlling operation of said detection device, said control unit being adapted to receive and process said first detection signals.

2. Detection device, according to claim 1, **characterised in that** said control unit (4) is adapted to determine an operating condition of air-drying salts contained in said breather (50) based on said first detection signals (S1).

3. Detection device, according to one or more of the previous claims, **characterised in that** it comprises a switch device (5) to activate a remote protection device (70), said control unit (4) being operatively coupled with said switch device.

4. Detection device, according to one or more of the previous claims, **characterised in that** it comprises a communication port (6) for communication with a remote computerised device (80), said control unit (4) being operatively coupled with said communication port.

5. Detection device, according to one or more of the previous claims, **characterised in that** it comprises a power supply unit (5) operatively coupleable to a power supply source and adapted to feed one or more components of said detection device.

6. Detection device, according to one or more of the previous claims, **characterised in that** it comprises fixing means (7) for mechanical connection with said breather (50).

7. Detection device, according to claims 2 and 3, **characterised in** said control unit (4) is adapted to provide control signals (C3) to command said remote protection device (70) upon activation by said switch device (5).

8. Detection device, according to claims 2 and 4, **characterised in that** said control unit (4) is adapted to provide second detection signals (S2) indicative of an operating of air-drying salts contained in said breather (50) to said remote computerised device (80) through said communication port (6).

9. Detection device, according to claim 4, **characterised in that** said control unit (4) is adapted to provide third detection signals (S3) indicative of the indicative of the colour of said second light radiation (L2) to said remote protection device (80) through said communication port (6).

10. A breather (50) for power transformers **characterised in that** it is operatively coupled with at least a detection device (1), according to one or more of the previous claims.

11. A power transformer (100) for electric transmission and distribution installations, **characterised in that** it comprises at least a breather (50) according to claim 10.
